Europäisches Patentamt

European Patent Office

Office européen des brevets

(11) Veröffentlichungsnummer: **0 330 894**

**A2**

## (12) EUROPÄISCHE PATENTANMELDUNG

(21) Anmeldenummer: **89102409.3**

(51) Int. Cl.⁴: **F16L 33/26**

(22) Anmeldetag: **11.02.89**

(30) Priorität: **02.03.88 DE 3806643**

(43) Veröffentlichungstag der Anmeldung:
**06.09.89 Patentblatt 89/36**

(84) Benannte Vertragsstaaten:
**AT BE DE ES FR GB NL SE**

(71) Anmelder: **Witzenmann GmbH**
**Metallschlauch-Fabrik Pforzheim**
**Östliche Karl-Friedrich-Strasse 134**
**D-7530 Pforzheim(DE)**

(72) Erfinder: **Eitel, Fritz**
**Silcher Strasse 4**
**D-7547 Wildbad(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach**
**4026**
**D-7500 Karlsruhe 1(DE)**

(54) **Verbindungsanordnung für einen Metallschlauch mit schraubengangförmiger Wellung beziehungsweise Wicklung.**

(57) Es wird eine Verbindungsanordnung für einen Metallschlauch mit schraubengangförmiger Wellung beziehungsweise Wicklung und mit wenigstens einer endständig mit einem Schlauchende durch Schweißen oder Löten verbundenen Metallhülse angegeben, wobei Schlauch und Hülse sich über eine endständig an der Hülse ausgebildete Profilierung in gegenseitiger Verbindung befinden. Dabei ist das dem Schlauchende zugewandte Ende der Hülse in Radialrichtung zu einem auf den Schlauch zu gerichteten Bund abgebogen beziehungsweise aufgebogen und es verläuft die stoffschlüssige Verbindung des Hülsenendes mit dem Schlauchende entlang diesem Bund.

Fig. 2

Xerox Copy Centre

# Verbindungsanordnung für einen Metallschlauch mit schraubengangförmiger Wellung beziehungsweise Wicklung

Die Erfindung betrifft eine Verbindungsanordnung für einen Metallschlauch in Form eines ein- oder mehrwandigen Wellschlauches oder Wickelschlauches mit schraubengangförmiger Wellung beziehungsweise Wicklung, insbesondere für Abgasanlagen von Kraftfahrzeugen, mit wenigstens einer endständig mit einem Schlauchende durch Schweißen oder Löten verbundenen, hohlzylindrischen, als Blechteil ausgebildeten Metallhülse, wobei der Schlauch und die Hülse sich über eine endständig an der Hülse ausgebildete Profilierung in gegenseitiger Verbindung befinden.

Eine derartige Verbindungsanordnung ist durch die DE-PS 34 47 270 bekannt. Dort ist die zur Verbindung mit dem Schlauch vorgesehene endständige Profilierung der Hülse als aus dem Blechmaterial der Hülse gebogener Gewindegang ausgebildet, dessen Material mit dem Schlauchende verschweißt ist. Hierdurch ist eine einfache Montage durch Aufsetzen der Hülse mittels einer einzigen schraubenden Drehung gewährleistet und es ist auch eine Vergleichmäßigung des Materialangebotes innerhalb der rundum laufenden Schweißverbindung erreicht. Das erwähnte schraubende Aufsetzen der Hülse führt jedoch nicht zu einer definierten gegenseitigen Positionierung von Hülse und Schlauch in Axialrichtung, was einem genauen Einspannen eines endständig mit Hülsen versehenen Schlauches für die weitere Bearbeitung, insbesondere Schweißbearbeitung im Wege steht, wobei die hier mitgegebenen Toleranzprobleme auch dadurch bedingt sind, daß zum leichten Aufschrauben zwischen Hülse und Schlauch eine verhältnismäßig große Lose vorgesehen ist.

Darüber hinaus ergeben sich im Übergang vom Gewinde der Hülse zum gewindegangförmigen Verlauf der Schlauchprofilierung durch die Unterschiede der beiderseitigen Wandstärken noch Ungleichmäßigkeiten hinsichtlich der über den gesamten Umfang umlaufenden Schweißverbindung mit der Gefahr eines Durchbrennens des Schlauchmaterials insbesondere im Übergangsbereich zwischen Hülse und Schlauch einerseits und einer bezüglich der Schweißverbindung zu geringen Erhitzung des Materials der Hülse andererseits.

Aufgabe der Erfindung ist es daher, eine Verbindungsanordnung der eingangs genannten Art derart auszubilden, daß sich beim Aufsetzen der Hülsen deren praktisch spielfreier Sitz bei in Axialrichtung des Schlauches definierter Positionierung ergibt, und durch die dazu erforderlichen Maßnahmen gleichzeitig eine weitestgehende Vergleichmäßigung der Materialverhältnisse innerhalb des Schweißnahtbereiches über den Umfang des Schlauches mit gleichzeitiger Schonung des in den Schweißvorgang einbezogenen Schlauchmaterials selbst gegeben ist.

Diese Aufgabe ist erfindungsgemäß dadurch gelöst, daß das dem Schlauchende zugewandte Ende der Hülse in Radialrichtung zu einem auf den Schlauch zu gerichteten und abgebogen beziehungsweise aufgebogen ist und daß die stoffschlüssige Verbindung des Hülsenendes mit dem Schlauchende entlang diesem Bund verläuft.

Durch diese erfindungsgemäßen Maßnahmen ist zunächst einmal sichergestellt, daß die jeweilige Hülse unter Zuhilfenahme des durch ihren Bund gebildeten Anschlages in eine definierte Axialposition auf das jeweilige Schlauchende aufgesetzt werden kann, wobei für die damit verbundene Relativbewegung zwischen Schlauchende und Hülse keine besonders großen Toleranzen vor gesehen werden müssen, da das Aufstecken der Hülse auch gegen einen gewissen Widerstand beispielsweise mit Hilfe dafür eingerichteter Werkzeuge erfolgen kann. Das in Axialrichtung definierte Aufsetzen der Hülsen ergibt die Möglichkeit, in Vorbereitung der schweißenden Bearbeitung Halbfabrikate mit innerhalb eines äußerst geringen Toleranzbereiches definierter Länge herzustellen, so daß der Automat zur Herstellung der die Hülsen mit den Schlauchenden verbindenden Schweißnähte sehr genau und feinfühlig eingestellt beziehungsweise eingerichtet werden kann.

Darüber hinaus bieten sich nunmehr zur Herstellung der endständigen Schweißnähte durch den jeweiligen einheitlich umlaufenden Bund der Hülsen sehr gleichmäßige Materialverhältnisse an, die im wesentlichen durch die Wandstärke des die Hülsen bildenden Materials gegeben sind. Soweit das endständige, dünnwandige Schlauchmaterial mit in die Schweißverbindung einzubeziehen ist, ist dieses durch das von der Schweißvorrichtung zunächst erfaßte Hülsenmaterial geschont, in dem dieses in erster Linie der Hitzeeinwirkung ausgesetzt ist beziehungsweise in einer gleichmäßig über den Umfang umlaufenden Weise diese Hitzeeinwirkung in ihrem wesentlichen Teil zunächst einmal abfängt.

Dadurch kann es zu einem Durchbrennen des endständigen Schlauchmaterials nicht mehr kommen, obwohl auf der anderen Seite dessen Verflüssigung im Rahmen der herzustellenden Schweißverbindung in einer schonenden Weise gewährleistet ist. Gleichzeitig ist, wie vorstehend erläutert, die genaue Dosierung der für die Schweißverbindung erforderlichen Energiezufuhr durch feinfühlige Einstellung der Schweißvorrichtung möglich, die ihrerseits durch die innerhalb engster Toleranzen mögliche Vorfertigung der mit aufgesteckten Hülsen versehenen Schläuche erlaubt ist.

Im Rahmen der Erfindung ist es zweckmäßig, daß ein Anschlußteil aus Metall mit seinem zylindrischen Teil in das Schlauchende ein- beziehungsweise auf dieses aufgesetzt sowie mit den Stirnkanten von Schlauch und Hülse verschweißt ist. Ein solches Anschlußteil kann mit seinem zylindrischen Teil zusammen mit der Hülse eine hohlzylindrische Kammer bilden, die im Bereich des Schlauchendes durch die umlaufende Schweißnaht abgeschlossen ist, wobei dort im wesentlichen der Bund der Hülse mit dem zylindrischen Teil des Anschlußteiles verschweißt ist. In diesem Zusammenhang ist es vorteilhaft, wenn der zylindrische Teil des Anschlußteiles neben dem Bund der Hülse eine stufenförmig auf diesen zu gerichtete Querschnittsänderung aufweist.

Weitere Merkmale und Einzelheiten der Erfindung ergeben sich aus der nachfolgenden Beschreibung einer Ausführungsform, die auf der Zeichnung dargestellt ist. In der Zeichnung zeigen:

Figur 1 einen Metallschlauch mit Anschlußstücken in Seitenansicht, teilweise geschnitten und

Figur 2 die Einzelheit II aus Figur 1 in vergrößerter Schnittansicht

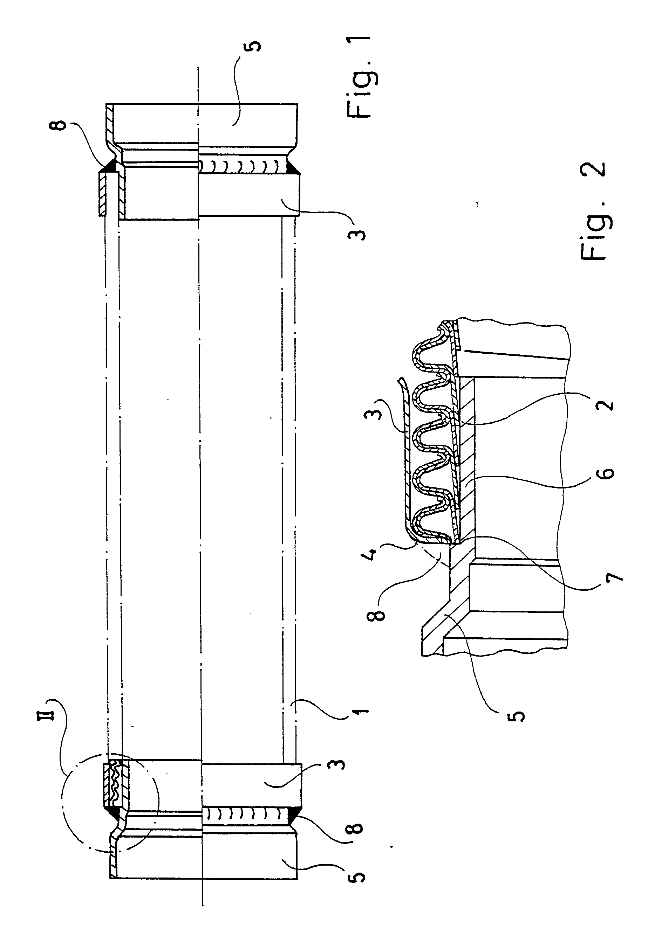

Figur 1 zeigt in vereinfachter Seitenansicht einen Wellschlauch 1, der, wie auch deutlicher aus Figur 2 ersichtlich, durch schraubengangförmiges Wickeln eines vorprofilierten Bandes mehrlagig gebildet ist, wobei der in Vorschubrichtung des Wickelvorganges vorn liegende Bandbereich eine sich ausgehend vom dortigen Wellental axial erstreckende, rohrförmige Verlängerung 2 einstückig verbunden aufweist, die im wesentlichen dazu dient, Resonanzschwingungen des Wellschlauches zu dämpfen und den Strömungswiderstand des Innenquerschnittes des Schlauches herabzusetzen. Ein derartiger Wellschlauch ist durch die DE-PS 26 45 946 bekannt.

Auf die Enden des Wellschlauches 1 sind Hülsen 3 aufgeschoben. Diese Hülsen 3 sind endständig unter Bildung eines umlaufenden Bundes 4 in Richtung auf den Schlauch 1 abgebogen, wobei der Bund 4 beim Aufstekken der Hülsen 3 auf den Schlauch 1 gegen das jeweilige Stirnende des Schlauches in Anlage kommt.

In die Enden des Schlauches 1 sind Anschlußteile 5 mit ihrem zylindrischen Teil 6 eingesetzt derart, daß eine stufenförmige, auf den benachbarten Bund 4 zu gerichtete Querschnittsänderung 7 des zylindrischen Teiles 6 dem genannten Bund 4 gegenüberliegend positioniert ist.

Wie in Figur 1 ausgezeichnet und in Figur 2 durch gestrichelte Linien angedeutet sind schließlich das jeweilige Ende des Metallschlauches 1, der Bund 4 der dortigen Hülse 3 sowie das Anschlußteil 5 im Bereich der Querschnittsänderung 7 durch eine Schweißung 8 miteinander verbunden. Bei dieser Verschweißung steht im wesentlichen der Bund 4 in über den Umfang gleichmäßigerweise als Schweißmaterial zur Verfügung, das auch in erster Linie die Schweißenergie aufnimmt, so daß die benachbarte Abschlußkante des Schlauches 1 nur indirekt und damit in geschonter Weise mit dem Schweißbrenner in Verbindung steht, um für die Herstellung der gemeinsamen Schweißverbindung erhitzt und verflüssigt zu werden

Das Aufstecken der Hülsen 3 auf den Schlauch 1 erlaubt innerhalb sehr enger Toleranzen eine genaue axiale Positionierung des Bundes 4 in Vorbereitung des Schweißvorganges, so daß ein so ausgerüsteter Wellschlauch leicht im Zuge eines automatischen Fertigungsverfahren einer feinfühlig eingestellten Schweißvorrichtung zugeführt werden kann. Bei der Durchführung des Schweißvorganges selbst ist ein Durchbrennen infolge sich ändernder, am Schweißvorgang beteiligter Materialquerschnitte nicht mehr möglich, da der Bund 4 über den gesamten Umfang in gleichbleibender Axialposition die gleiche Materialmenge anbietet.

## Ansprüche

1. Verbindungsanordnung für einen Metallschlauch in Form eines ein- oder mehrwandigen Wellschlauches oder Wickelschlauches mit schraubengangförmiger Wellung beziehungsweise Wicklung, insbesondere für Abgasanlagen von Kraftfahrzeugen, mit wenigstens einer endständig, mit einem Schlauchende durch Schweißen oder Löten verbundenen, hohlzylindrischen, als Blechteil ausgebildeten Metallhülse, wobei der Schlauch und die Hülse sich über eine endständig an der Hülse ausgebildete Profilierung in gegenseitiger Verbindung befinden,
dadurch gekennzeichnet,
daß das dem Schlauchende zugewandte Ende der Hülse (3) in Radialrichtung zu einem auf den Schlauch (1) zu gerichteten Bund (4) abgebogen beziehungsweise aufgebogen ist und daß die stoffschlüssige Verbindung (8) des Hülsenendes mit dem Schlauchende entlang diesem Bund verläuft.

2. Verbindungsanordnung nach Anspruch 1, dadurch gekennzeichnet, daß ein Anschlußteil (5) aus Metall mit seinem zylindrischen Teil (6) in das Schlauchende ein- bzw. auf dieses aufgesetzt sowie mit den Stirnkanten von Schlauch (1) und Hülse (3) verschweißt ist.

3. Verbindungsanordnung nach Anspruch 2, dadurch gekennzeichnet, daß der zylindrische Teil (6) des Anschlußteiles (5) neben dem Bund (4) der Hülse (3) eine stufenförmig auf diesen zu gerichtete Querschnittsänderung (7) aufweist.

4. Verbindungsanordnung nach einem der vorhergehenden Ansprüche, dadurch gekennzeichnet, daß die Hülse (3, 4) ein tiefgezogenes Formteil ist.

Fig. 1

Fig. 2

EP 0 330 894 A2